# EUROPEAN PATENT SPECIFICATION

(11) **EP 3 385 291 B1**
(45) Date of publication and mention of the grant of the patent: **05.08.2020**
(21) Application number: 16870738.8
(22) Date of filing: 30.11.2016
(51) Int. Cl.: C08F 214/26, C08F 14/26, C08L 27/18, C08F 2/00, C08F 2/26, C08F 2/38, C09D 127/18, C08L 71/02

(54) **METHOD FOR PRODUCING TETRAFLUOROETHYLENE COPOLYMER AQUEOUS DISPERSION**
VERFAHREN ZUR HERSTELLUNG EINER WÄSSRIGEN TETRAFLUORETHYLENCOPOLYMERDISPERSION
PROCÉDÉ DE PRODUCTION D'UNE DISPERSION AQUEUSE DE COPOLYMÈRE DE TÉTRAFLUOROÉTHYLÈNE

(30) Priority: 01.12.2015 JP 2015235105
(43) Date of publication of application: 10.10.2018
(73) Proprietor: AGC Inc., Tokyo 100-8405 (JP); AGC Chemicals Europe, Limited, Thornton-Cleveleys, Lancashire FY5 4QD (GB)
(72) Inventor: KOBAYASHI, Shigeki, Tokyo 100-8405 (JP); NAGAI, Hiroki, Tokyo 100-8405 (JP); HIGUCHI, Shinya, Tokyo 100-8405 (JP); TANAKA, Akiko, Tokyo 100-8405 (JP); TAKAZAWA, Masahiro, Tokyo 100-8405 (JP); MORGOVAN-ENE, Ariana Claudia, Thornton-Cleveleys Lancashire FY5 4QD (GB); WADE, Anthony Eugene, Thornton-Cleveleys Lancashire FY5 4QD (GB); CAINE, Diane, Thornton-Cleveleys Lancashire FY5 4QD (GB)
(74) Representative: Müller-Boré & Partner Patentanwälte PartG mbB
(86) International application number: PCT/JP2016/085622
(87) International publication number: WO 2017/094801

(56) References cited:
- EP-A1- 2 039 709
- JP-A- H05 279 579
- JP-A- 2002 308 914
- JP-A- 2008 540 807
- JP-A- 2012 162 708
- JP-A- 2012 207 232
- US-A- 4 792 594

## Description

### TECHNICAL FIELD

The present invention relates to a method for producing a tetrafluoroethylene copolymer aqueous dispersion.

### BACKGROUND ART

Heretofore, a method is known wherein tetrafluoroethylene (hereinafter referred to also as TFE) is subjected to emulsion polymerization in an aqueous medium to obtain an aqueous emulsion containing polytetrafluoroethylene particles, which is then concentrated to obtain an aqueous dispersion.

Such an aqueous dispersion is useful, for example, for various coating applications, impregnation applications, etc., by incorporating various additives as the case requires.

Patent Document 1 discloses a method for producing a TFE copolymer aqueous dispersion, wherein, for the purpose of improving heat resistance of polytetrafluoroethylene, at the time of the emulsion polymerization, a comonomer highly reactive with TFE is used to form an aqueous emulsion having fine particles of a tetrafluoroethylene copolymer (hereinafter referred to also as a TFE copolymer) dispersed, and a nonionic surfactant is added to the aqueous emulsion, followed by concentration.

Patent Document 2 describes in Example 4 the emulsion polymerisation of TFE in the presence of PFOA as emulsifier in two stages. When the polymerisation reaction has consumed 88.9 % of TFE a modifying monomer (HFP) and a chain transfer agent (methanol) are added to the reaction and the polymerisation is continued with further addition of TFE until the total is reached. The amount of modifying monomer copolymerized in the resulting polymer is of 0.001 mol.-%. The concentration of this dispersion is also described, whereby a nonionic surfactant is added to the dispersion, the dispersion is passed through an anion exchange resin to remove the PFOA, further nonionic surfactant is added to a total concentration relative to polymer of 20% and the resulting dispersion is concentrated to a final fluoropolymer concentration of 64%. The dispersion has good mechanical and storage stability.

### PRIOR ART DOCUMENTS

### PATENT DOCUMENTS

Patent Document 1: WO2011/055824
Patent Document 2: EP2039709 A1

### DISCLOSURE OF INVENTION

### TECHNICAL PROBLEM

However, according to findings by the present inventors, the TFE copolymer aqueous dispersion obtained by the method disclosed in Patent Document 1 may sometimes undergo agglomeration or solidification of fine particles of the TFE copolymer when subjected to a mechanical stress by e.g. stirring, and thus, improvement in the stability is desired.

It is an object of the present invention to provide a TFE copolymer aqueous dispersion excellent in the stability (hereinafter referred to also as the mechanical stability) against a mechanical stress.

### SOLUTION TO PROBLEM

The present invention provides a method for producing a TFE copolymer aqueous dispersion having the following constructions [1] to [13]:
[1] A method for producing an aqueous dispersion containing a TFE copolymer, characterized by comprising
   a polymerization step of subjecting TFE and a (perfluoroalkyl) ethylene represented by the following formula (1) to a polymerization reaction, in an aqueous medium, using a polymerization initiator, in the presence of a fluorinated emulsifier selected from the group consisting of C₄₋₇ fluorinated carboxylic acids having from 1 to 4 etheric oxygen atoms, and salts thereof, to obtain an aqueous emulsion having particles of a TFE copolymer dispersed with a solid content concentration of from 10 to 45 mass%, and
   a concentrating step of adding a nonionic surfactant represented by the following formula (2) to the aqueous emulsion, followed by concentration to a solid content concentration of from 50 to 70% mass% to obtain an aqueous dispersion, wherein
   in the polymerization step, TFE is continuously or intermittently supplied to the polymerization reaction vessel, the (perfluoroalkyl) ethylene is initially added all at once, and a chain transfer agent is added at the time when from 10 to 95 mass% of the total mass of TFE to be used in the polymerization reaction has been supplied,

   CH₂=CH-Rf (1)

   in the formula (1), Rf is a C₁₋₇ perfluoroalkyl group,

   R¹-O-A-H (2)

   wherein R¹ is a C₈₋₁₈ alkyl group, and A is a polyoxyalkylene chain composed of an average repeating number of from 5 to 20 oxyethylene groups and an average repeating number of from 0 to 2 oxypropylene groups.
[2] The method for producing an aqueous dispersion according to [1], wherein the amount of the chain transfer agent to be used is from 20 to 10,000 ppm to the total mass of TFE to be used in the polymerization reaction.
[3] The method for producing an aqueous dispersion according to [1] or [2], wherein the chain transfer agent is methanol.
[4] The method for producing an aqueous dispersion according to any one of [1] to [3], wherein the amount of the (perfluoroalkyl) ethylene to be used is from 20 to 3,000 ppm to the total mass of TFE to be used in the polymerization reaction.
[5] The method for producing an aqueous dispersion according to any one of [1] to [4], wherein the (perfluoroalkyl) ethylene is (perfluoroethyl) ethylene, (perfluorobutyl) ethylene or (perfluorohexyl) ethylene.
[6] The method for producing an aqueous dispersion according to any one of [1] to [5], wherein the nonionic surfactant is added in an amount of from 1 to 20 parts by mass to 100 parts by mass of the solid content in the aqueous emulsion.
[7] The method for producing an aqueous dispersion according to any one of [1] to [6], wherein the fluorinated emulsifier is an ammonium salt of one of the fluorinated carboxylic acids.
[8] The method for producing an aqueous dispersion according to any one of [1] to [7], wherein the amount of the fluorinated emulsifier to be used is from 1,500 to 20,000 ppm to the total mass of TFE to be used in the polymerization reaction.
[9] The method for producing an aqueous dispersion according to any one of [1] to [8], wherein in the formula (2), R¹ is C₁₀₋₁₆, and A is a polyoxyalkylene chain composed of an average repeating number of from 7 to 12 oxyethylene groups and an average repeating number of from 0 to 2 oxypropylene groups.
[10] The method for producing an aqueous dispersion according to any one of [1] to [9], wherein the amount of the nonionic surfactant to be added before the concentration is from 1 to 20 parts by mass to 100 parts by mass of the solid content in the aqueous emulsion before the concentration.
[11] The method for producing an aqueous dispersion according to any one of [1] to [10] wherein the content of the nonionic surfactant after the concentration is from 1 to 20 parts by mass to 100 parts by mass of the solid content in the aqueous dispersion.
[12] The method for producing an aqueous dispersion according to any one of [1] to [11], wherein the average primary particle size of the particles of the TFE copolymer is from 0.1 to 0.5 µm.
[13] The method for producing an aqueous dispersion according to any one of [1] to [12] wherein the standard specific gravity of the TFE copolymer is from 2.14 to 2.25.

### ADVANTAGEOUS EFFECTS OF INVENTION

According to the method for producing a TFE copolymer aqueous dispersion of the present invention, it is possible to obtain a TFE copolymer aqueous dispersion excellent in mechanical stability.

### BRIEF DESCRIPTION OF DRAWINGS

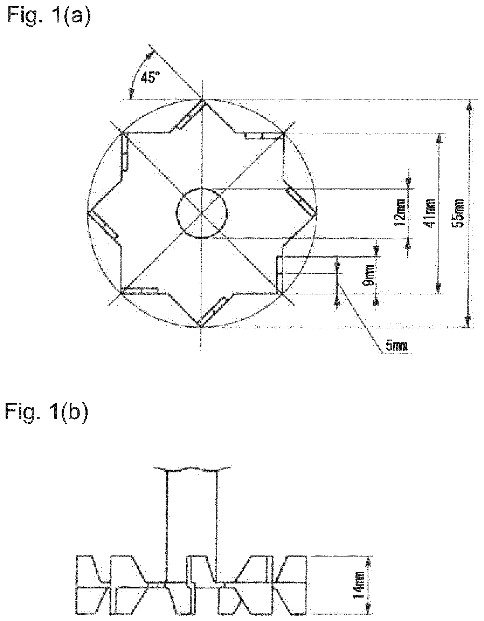

Fig. 1 shows the stirring blade used for the evaluation of mechanical stability, wherein (a) is a plan view as viewed from above, and (b) is a side view.

### DESCRIPTION OF EMBODIMENTS

Meanings of the following terms are as follows.

The "average primary particle size" of particles (hereinafter referred to also as copolymer particles) of the TFE copolymer (hereinafter referred to as the copolymer) means a median diameter on volume basis of the particle sizes of copolymer particles in the TFE copolymer aqueous dispersion as measured by a laser scattering method particle size distribution analyzer. Usually, the particle sizes of copolymer particles, do not change in the concentrating step, and thus, are the same as the particle sizes of copolymer particles in the TFE copolymer aqueous emulsion.

The "standard specific gravity (hereinafter referred to also as SSG)" is an index for the molecular weight of the TFE copolymer, and the larger this value, the smaller the molecular weight. The measurement is carried out in accordance with ASTM D1457-91a, D4895-91a.

The "ppm" as a unit for the content is by mass.

The method for producing a TFE copolymer aqueous dispersion (hereinafter referred to also as an aqueous dispersion) of the present invention comprises a polymerization step of subjecting TFE and a specific comonomer to a polymerization reaction, in an aqueous medium, using a polymerization initiator, in the presence of a fluorinated emulsifier to obtain a TFE copolymer aqueous emulsion (hereinafter referred to also as an aqueous emulsion) having particles of a TFE copolymer dispersed, and a concentrating step of adding a nonionic surfactant to the aqueous emulsion, followed by concentration to obtain an aqueous dispersion, wherein a chain transfer agent is added during the polymerization reaction.

### <Comonomer>

In the present invention, as the comonomer, a (perfluoroalkyl) ethylene (hereinafter referred to as PFAE) represented by CH₂=CH-Rf (Rf represents a C₁₋₇ perfluoroalkyl group) is to be used. PFAE has a sufficient copolymerization reactivity with TFE.

By using PFAE as the comonomer, the particle size of primary particles of the TFE copolymer tends to be uniform.

It is considered that a compound wherein the number of carbon atoms in Rf is 8 or more is likely to contain a compound similar to an ammonium perfluorooctanoate, of which the decomposition product is an environmentally concerned substance, and therefore, the number of carbon atoms in Rf is environmentally preferably at most 7.

The number of carbon atoms in Rf is preferably from 2 to 7, more preferably from 2 to 6. Particularly, CH₂=CH-(CF₂)₂F ((perfluoroethyl) ethylene), CH₂=CH-(CF₂)₄F ((perfluorobutyl) ethylene, hereinafter referred to as PFBE), and CH₂=CH-(CF₂)₆F ((perfluorohexyl) ethylene) are preferred. As PFAE, two or more types may be used in combination.

The amount of PFAE to be used is preferably from 20 to 3,000 ppm, more preferably from 50 to 2,000 ppm, further preferably from 100 to 2,000 ppm, most preferably from 100 to 1,000 ppm, to the total mass of TFE to be used in the polymerization reaction. When the amount of PFAE is in the above range, the aqueous emulsion during polymerization and the aqueous dispersion to be prepared therefrom, will have a sufficient mechanical stability, the polymerization rate will be proper, and the productivity of the aqueous emulsion will be excellent.

The TFE copolymer obtained by copolymerizing the above-mentioned amount of PFAE is a TFE copolymer with non-melt-moldability, so-called a modified PTFE. The "non-melt-moldability" means being not melt moldable, i.e. showing no melt fluidity. Specifically, it means that the melt flow rate to be measured in accordance with ASTM D3307 at a measuring temperature of 372°C under a load of 49 N is less than 0.5 g/10 min.

### <Fluorinated emulsifier>

The fluorinated emulsifier to be used in the polymerization step is a fluorinated emulsifier selected from the group consisting of C₄₋₇ fluorinated carboxylic acids which may have an etheric oxygen atom, and salts thereof. Here, the number of carbon atoms means the total number of carbon atoms per molecule.

The fluorinated emulsifier is preferably a fluorinated emulsifier selected from the group consisting of C₄₋₇ fluorinated carboxylic acids having an etheric oxygen atom, and salts thereof.

The fluorinated carboxylic acid having an etheric oxygen atom is a C₄₋₇ compound having an ether oxygen atom midway in the carbon chain of the main chain and having -COOH at its terminal. The terminal -COOH may form a salt. The number of etheric oxygen atoms present midway in the main chain is at least 1, preferably from 1 to 4, more preferably 1 or 2. The number of carbon atoms is preferably from 5 to 7.

Further, the PTFE aqueous dispersion may contain two or more of the above fluorinated emulsifiers.

Specific preferred examples of the fluorinated carboxylic acid include C₂F₅OCF₂CF₂OCF₂COOH, C₃F₇OCF₂CF₂OCF₂COOH, CF₃OCF₂OCF₂OCF₂OCF₂COOH, CF₃O(CF₂CF₂O)₂CF₂COOH, CF₃CF₂O(CF₂)₄COOH, CF₃CFHO(CF₂)₄-COOH, CF₃OCF(CF₃)CF₂OCF(CF₃)COOH, CF₃O(CF₂)₃OCF(CF₃)COOH, CF₃O(CF₂)₃OCHFCF₂COOH, C₄F₉OCF(CF₃)COOH, C₄F₉OCF₂CF₂COOH, CF₃O(CF₂)₃OCF₂COOH, CF₃O(CF₂)₃OCHFCOOH, CF₃OCF₂ OCF₂OCF₂COOH, C₄F₉OCF₂COOH, C₃F₇OCF₂CF₂COOH, C₃F₇OCHFCF₂COOH, C₃F₇OCF(CF₃)COOH, CF₃CFHO(CF₂)₃COOH, CF₃OCF₂CF₂OCF₂COOH, C₂F₅OCF₂CF₂COOH, C₃F₇OCHFCOOH, CF₃OCF₂CF₂COOH, CF₃(CF₂)₄COOH, C₅F₁₁COOH, and C₆F₁₃COOH.

More preferred examples may be C₂F₆OCF₂CF₂OCF₂COOH, CF₃O(CF₂)₃OCF₂COOH, CF₃OCF(CF₃)CF₂OCF(CF₃)COOH, CF₃O(CF₂)₃OCF₂CF₂COOH, CF₃O(CF₂)₃OCHFCF₂COOH, C₄F₉OCF(CF₃)COOH, and C₃F₇OCF(CF₃)COOH.

The salts of the above fluorinated carboxylic acids may, for example, be Li salts, Na salts, K salts and NH₄ salts.

A further preferred fluorinated emulsifier is a NH₄ salt (ammonium salt) of the above fluorinated carboxylic acid. When it is the ammonium salt, it will be excellent in solubility in an aqueous medium, and there is no possibility that a metal ion component will remain as an impurity in the TFE copolymer.

C₂F₅OCF₂CF₂OCF₂COONH₄ (hereinafter referred to as EEA) is particularly preferred.

The amount of the fluorinated emulsifier to be used is preferably from 1,500 to 20,000 ppm, more preferably from 2,000 to 20,000 ppm, further preferably from 2,000 to 15,000 ppm, to the total mass of TFE to be used in the polymerization reaction.

When the amount of the fluorinated emulsifier to be used is in the above range, stability of the aqueous emulsion during the polymerization will be good. On the other hand, if it is less than the lower limit value in the above range, stability of the aqueous emulsion during the polymerization will be insufficient, and if it exceeds the upper limit value, such stability of the aqueous emulsion that commensurates with the amount of the emulsifier used will not be obtained.

### <Polymerization Initiator>

As the polymerization initiator to be used in the polymerization step, a water-soluble radical initiator or a water-soluble redox catalyst is, for example, preferred. As the water-soluble radical initiator, a persulfate such as ammonium persulfate or potassium persulfate, or a water-soluble organic peroxide such as disuccinic acid peroxide, bisglutaric acid peroxide or tert-butyl hydroperoxide, is preferred.

As the polymerization initiator, one type may be used alone, or two or more types may be used in combination. As the initiator, a mixed system of disuccinic acid peroxide and a persulfate is more preferred.

The amount of the polymerization initiator to be used, is preferably from 0.01 to 0.20 mass%, more preferably from 0.01 to 0.15 mass%, to the total mass of TFE to be used in the polymerization reaction.

### <Stabilizing aid>

It is preferred to use a stabilizing aid in the polymerization step. The stabilizing aid may preferably be paraffin wax, fluorinated oil, fluorinated solvent, silicone oil, etc. As the stabilizing aid, one type may be used alone, or two or more types may be used in combination. As the stabilizing aid, paraffin wax is more preferred.

The amount of the stabilizing aid to be used is preferably from 0.1 to 12 mass%, more preferably from 0.1 to 8 mass%, to the aqueous medium to be used.

### <Chain transfer agent>

In the polymerization reaction, the molecular weight of the copolymer produced in the presence of a chain transfer agent tends to be lower than the molecular weight of the copolymer produced in the absence of a chain transfer agent. Therefore, in the process wherein the copolymer particles grow by the polymerization reaction, it is possible to control the molecular weight distribution in the radial direction of the copolymer particles by providing a state in which the chain transfer agent is present and a state in which the chain transfer agent is not present.

The chain transfer agent is preferably a chain transfer agent selected from the group consisting of methanol, ethanol, methane, ethane, propane, hydrogen and a halogenated hydrocarbon, more preferably methanol. As the chain transfer agent, two or more types may be used in combination, and in such a case, it is preferred to use methanol as a part thereof.

The total amount of the chain transfer agent to be added in the polymerization step, is preferably from 20 to 10,000 ppm, more preferably from 50 to 10,000 ppm, further preferably from 50 to 8,000 ppm, most preferably from 100 to 8,000 ppm, to the total mass of TFE to be used in the polymerization reaction.

When the amount of the chain transfer agent is in the above range, the mechanical stability of the aqueous emulsion will be sufficient, the polymerization rate will be proper, and the productivity of the aqueous emulsion will be excellent. If it exceeds the upper limit value, the polymerization rate tends to be small, and the productivity of the aqueous emulsion tends to be low.

### <Aqueous medium>

As the aqueous medium, water or a mixed liquid of a water-soluble organic solvent and water, is to be used. The water may be ion exchanged water, pure water, ultrapure water, etc. The water-soluble organic solvent may, for example, be an alcohol (except for methanol and ethanol), a ketone, an ether, ethylene glycol, propylene glycol, etc. The aqueous medium is preferably water.

### <Nonionic surfactant>

In the concentrating step, a nonionic surfactant represented by the following formula (2) (hereinafter referred to as a nonionic surfactant (2)) is to be used. By adding a nonionic surfactant (2) to the aqueous emulsion obtained in the polymerization step, the dispersion stability of copolymer particles will be improved, whereby concentration becomes easy.

R¹-O-A-H (2)

In the formula (2), R¹ is a C₈₋₁₈ alkyl group. The number of carbon atoms in R¹ is preferably from 10 to 16, more preferably from 12 to 16. When the number of carbon atoms in R¹ is at most 18, good dispersion stability of the aqueous dispersion tends to be easily obtained. If the number of carbon atoms in R¹ exceeds 18, handling tends to be difficult, since the flow temperature is high. If the number of carbon atoms in R¹ is less than 8, the surface tension of the aqueous dispersion becomes high, whereby the permeability and wettability tend to be low.

A is a polyoxyalkylene chain composed of an average repeating number of 5 to 20 oxyethylene groups and an average repeating number of from 0 to 2 oxypropylene groups, and is a hydrophilic group. In a case where the average repeating number of oxypropylene groups exceeds 0, oxyethylene groups and oxypropylene groups in A may be arranged in a block form, or may be arranged in a random form.

From the viewpoint of the proper viscosity and stability of the aqueous dispersion, preferred is a polyoxyalkylene chain composed of an average repeating number of from 7 to 12 oxyethylene groups and an average repeating number of from 0 to 2 oxypropylene groups. In particular, it is preferred that A has from 0.5 to 1.5 oxypropylene groups, whereby the aqueous dispersion is less susceptible to foaming.

Specific examples of the nonionic surfactant (2) may be C₁₃H₂₇-O-(C₂H₄O)₁₀-H, C₁₂H₂₅-O-(C₂H₄O)₁₀-H, C₁₀H₂₁CH(CH₃)CH₂-O-(C₂H₄O)₉-H, C₁₃H₂₇-O-(C₂H₄O)₉-(CH(CH₃)CH₂O)-H, C₁₆H₃₃-O-(C₂H₄O)₁₀-H, HC(C₅H₁₁) (C₇H₁₅)-O-(C₂H₄O)₉-H, etc.

Commercially available products may, for example, be TERGITOL (registered trademark) 15S series manufactured by Dow Corp., LIONOL (registered trademark) TD series manufactured by Lion Corporation, etc.

The amount of the nonionic surfactant (2) to be added prior to concentration is preferably from 1 to 20 parts by mass, more preferably from 1 to 10 parts by mass, further preferably from 2 to 8 parts by mass, particularly preferably from 3 to 8 parts by mass, per 100 parts by mass of the solid content in the aqueous emulsion before concentration. Here, the amount of the solid content in the aqueous emulsion is approximately equal to the mass of the copolymer particles.

When the amount of the nonionic surfactant (2) is at least the lower limit value in the above range, the stability of the aqueous dispersion will be sufficient, and when it is at most the upper limit value, undesirable coloration or odor is less likely to occur during sintering of the copolymer.

### <Method for producing TFE copolymer aqueous dispersion>

### [Polymerization step]

First, TFE and PFAE are subjected to a polymerization reaction in an aqueous medium, using a polymerization initiator and further using a stabilizing aid, as the case requires, in the presence of a fluorinated emulsifier, and during the polymerization reaction a chain transfer agent is added. Thus, an aqueous emulsion wherein particles of a copolymer thereby formed are dispersed, is obtained. PFAE is, from such a viewpoint that the particle size of copolymer particles to be formed, tends to easily become uniform, added initially all at once, wherein before initiation of the polymerization reaction, its entire mass is charged in the polymerization reaction vessel.

TFE is supplied to the polymerization reaction vessel by a usual method. Specifically, it is added continuously or intermittently so that the pressure in the polymerization reaction vessel is maintained at a predetermined polymerization pressure.

As the polymerization conditions, the polymerization temperature is preferably from 10 to 95°C, and the polymerization pressure is preferably from 0.5 to 4.0 MPa. The polymerization time is preferably from 1 to 20 hours.

The chain transfer agent is added to the polymerization reaction vessel at the time when from 10 to 95 mass% of the total mass of TFE to be used in the polymerization reaction has been supplied after initiation of the polymerization reaction.

For example, if TFE is supplied into a polymerization reaction vessel to raise the pressure to a predetermined polymerization pressure P1, and then, a polymerization initiator is supplied, the polymerization reaction will be initiated and the pressure in the polymerization reaction vessel will be lowered to P2. The lowering of the pressure in the polymerization reaction vessel means that TFE has been used for the polymerization reaction, and a copolymer has been formed. TFE is continuously or intermittently supplied so that the pressure in the polymerization reaction vessel is maintained to be P1, and immediately after the total mass of TFE supplied to the polymerization reaction vessel after initiation of the polymerization reaction reaches X (at the time when the pressure has dropped to P2), the reaction is terminated by cooling, etc. In this case, the total mass of TFE used in the polymerization reaction is X, and in the case of homopolymerization of TFE, the mass of the formed polymer is approximately equal to X. X is preliminarily set as "the total mass of TFE to be used in the polymerization reaction".

"At the time when from 10 to 95 mass% of the total mass of TFE to be used in the polymerization has been supplied" specifically means "from the time when 10 mass% of the total mass of TFE to be used in the polymerization has been supplied to the polymerization reaction vessel, until the time before supplying more than 95 mass% of the total mass of TFE to be used in the polymerization".

The chain transfer agent is preferably added at the time when from 10 to 90 mass% of the total mass of TFE to be used in the polymerization has been supplied, particularly preferably added at the time when from 15 to 90 mass% has been supplied.

The chain transfer agent may be added by either addition all at once, continuous addition, or intermittent addition. In a case where the chain transfer agent is added by continuous addition or intermittent addition, at least the first addition is conducted at the time when TFE in the proportion within the above-mentioned range has been supplied to the polymerization reaction vessel. That is, it is necessary that the addition of the chain transfer agent is started at the time when TFE in the proportion within the above-mentioned range has been supplied to the polymerization reaction vessel, and the addition of the total mass of the chain transfer agent is completed before reaching the total mass of the amount of TFE to be used, preliminarily set as the amount of TFE to be supplied (i.e. before completion of the reaction).

The solid content concentration of the aqueous emulsion to be obtained in the polymerization step is from 10 to 45 mass%, preferably from 10 to 35 mass%, more preferably from 20 to 35 mass%. If it is less than the lower limit value in the above range, the productivity of the aqueous emulsion tends to be low, and if it exceeds the upper limit value, the stability of the aqueous emulsion in the polymerization tends to be low, and the formation amount of undesirable coagulum tends to be large. Further, the average primary particle size of copolymer particles tends to be large, the mechanical stability of the aqueous emulsion tends to be low, and the sedimentation stability tends to be low. Within the above range, the aqueous emulsion will be excellent in the mechanical stability, sedimentation stability, productivity, etc.

The solid content concentration in the aqueous emulsion can be adjusted by the amount of the aqueous medium to be used in the polymerization reaction.

Here, in the polymerization step, the total amount of TFE and PFAE to be consumed in the copolymerization reaction of TFE and PFAE is approximately equal to the amount of the copolymer particles to be formed. Further, the amount of the solid content in the aqueous emulsion obtainable in the polymerization step is approximately equal to the amount of the formed copolymer particles.

### [Concentrating step]

To the aqueous emulsion obtained in the polymerization step, a nonionic surfactant (2) is blended, followed by concentration to obtain an aqueous dispersion containing TFE copolymer particles at a high concentration.

As the concentration method, a known method such as a centrifugal sedimentation method, an electrophoresis method, a phase separation method, etc. may be utilized, as disclosed in, for example, page 32 of Fluororesin Handbook (edited by Satokawa Takaomi, published by Nikkan Kogyo Shimbun, Ltd.).

In the concentrating step, together with the supernatant, a certain amount of the fluorinated emulsifier and the nonionic surfactant (2) will be removed.

Further, before concentrating the aqueous dispersion obtained by adding a nonionic surfactant (2) to the aqueous emulsion, the fluorinated emulsifier in the aqueous dispersion may be reduced by a known method. For example, it is possible to use a method of adsorbing the fluorinated emulsifier on an anion exchange resin.

The concentration is carried out so as to obtain a concentrate having a solid content concentration of from 50 to 70 mass%. The solid content concentration in the concentrate is preferably from 55 to 70 mass%, more preferably from 55 to 65 mass%. If it is less than the lower limit value in the above range, the productivity at the time of molding processing tends to be low, and within the above range, the fluidity of the aqueous dispersion will be proper, the handling efficiency in the subsequent step will be excellent, and the productivity at the time of molding processing will be excellent.

The concentrate thus obtained may be used, as it is, as an aqueous dispersion.

Otherwise, as the case requires, a nonionic surfactant (2) may be additionally added after concentration to form an aqueous dispersion.

The content of the nonionic surfactant (2) in the finally obtainable aqueous dispersion is preferably from 1 to 20 parts by mass, more preferably from 1 to 10 parts by mass, further preferably from 2 to 8 parts by mass, particularly preferably from 3 to 8 parts by mass, to 100 parts by mass of the solid content in the aqueous dispersion.

Further, after concentration, other components which do not correspond to any of the above described components may be added to such an extent not to impair the effects of the present invention, to obtain an aqueous dispersion. As such other components, known additives such as a surfactant other than the nonionic surfactant (2), a defoaming agent, a viscosity modifier, a leveling agent, a preservative, a coloring agent, a filler, an organic solvent, aqueous ammonia, etc. may be mentioned.

The average primary particle size of copolymer particles contained in the aqueous dispersion is preferably from 0.1 to 0.5 µm, more preferably from 0.18 to 0.45 µm, particularly preferably from 0.20 to 0.35 µm. If the average primary particle size is smaller than 0.1 µm, cracking may sometimes occur in the coating layer formed by using the aqueous dispersion, and if it is larger than 0.5 µm, sedimentation of copolymer particles in the aqueous dispersion tends to be fast, such being not preferable from the viewpoint of the storage stability.

The average primary particle size of copolymer particles can be adjusted by the amount of PEAE to be used in the polymerization step. Usually, the average primary particle size of copolymer particles will not be changed in the concentrating step. Therefore, the average primary particle size of copolymer particles in the aqueous dispersion is the same as the particle size of copolymer particles in the aqueous emulsion.

The standard specific gravity (SSG) of the copolymer contained in the aqueous dispersion is preferably from 2.14 to 2.25, more preferably from 2.15 to 2.25. When SSG is within the above range, the copolymer tends to exhibit good mechanical properties in a final product produced by using the aqueous dispersion.

SSG of the copolymer can be adjusted by the amount of the chain transfer agent to be used in the polymerization step.

According to the production method of the present invention, the obtainable aqueous dispersion is excellent in mechanical stability. The reason is not clearly understood, but it is considered to be attributable to that the molecular weight of the copolymer in the vicinity of the surface of copolymer particles is low. As a result, even if copolymer particles collide one another in the aqueous dispersion, the copolymer at outside of the copolymer particles has less tendency to be fibrillated, whereby aggregation by coalescence of the particles is less likely to occur.

Further, since PFAE is used as a comonomer to be copolymerized with TFE, the percentage of irregular particles in copolymer particles is less, and the uniformity in the particle size of the copolymer is good, which are also considered to contribute to the improvement in the mechanical stability of the aqueous dispersion.

### EXAMPLES

In the following, the present invention will be described in further detail with reference to Examples, but the present invention is not limited to these Examples.

The following measuring methods and evaluation methods were used.

### <Average primary particle size of copolymer particles>

Measured by using a laser scattering method particle size distribution analyzer (manufactured by Horiba, Ltd., LA-920 (product name))

### <Standard specific gravity (SSG) of TFE copolymer>

Measured in accordance with ASTM D1457-91 a, D4895-91a.

### <Solid content concentration in aqueous emulsion or aqueous dispersion>

10 g of the aqueous emulsion or aqueous dispersion was put in an aluminum dish with a known mass, and heated at 380°C for 35 minutes, to pyrolyze and remove a surfactant, etc., whereupon the mass of material remaining in the aluminum dish was adopted as the mass of the solid content in 10 g of the object to be measured (the aqueous emulsion or aqueous dispersion), and the solid content concentration (mass%) was calculated.

### <Method for evaluation of mechanical stability>

100 g of the aqueous dispersion was put in a plastic cup having a diameter of 65 mm and an inner volume of 400 ml, and immersed in a water bath at 60°C, and a stirring blade (Fig. 1) having a diameter of 55 mm was set so that the height from the bottom surface of the plastic cup to the center of the stirring blade (the position at 7 mm from the lower end of the stirring blade in the axial direction in Fig. 1(b)), would be 20 mm, and rotated at 2,500 rpm, whereby the time until the aqueous dispersion was aggregated or solidified and scattered, was measured as a stability retention time. The longer the stability retention time, the better the mechanical stability.

In the following description, the following names represent the following components.
Comonomer (1): PFBE.
Fluorinated emulsifier (1): EEA.
Chain transfer agent (1): methanol.
Nonionic surfactant (1): TERGITOL TMN100X (an aqueous solution with an active component concentration of 90 mass%, (product name, manufactured by Dow Chemical Company)).

### [Example 1]

### (Polymerization step)

Into a 100 L stainless steel autoclave equipped with baffles and a stirrer, 75 g of the fluorinated emulsifier (1), 924 g of paraffin wax, 59 L of deionized water were charged. The autoclave was purged with nitrogen and brought to a reduced pressure, whereupon 3.5 g of the comonomer (1) was charged. Further, while pressurizing with TFE, the temperature was raised to 79°C with stirring. Then, the pressure was raised to 1.32 MPa with TFE, and 0.2 g of ammonium persulfate and 26.3 g of disuccinic acid peroxide (concentration: 80 mass%, remainder: water) dissolved in 1 L of hot water at about 70°C were injected to initiate a polymerization reaction. The internal pressure dropped to 1.30 MPa in about 7 minutes. While adding TFE so that the internal pressure of the autoclave was maintained to be 1.32 MPa, the polymerization was continued. During the polymerization, 158 g of the fluorinated emulsifier (1) dissolved in 1 L of water was added. At the time when the amount of TFE added after initiation of the polymerization became 20.8 kg, 13.9 g of the chain transfer agent (1) was added. Then, at the time when the amount of TFE added after initiation of the polymerization (the total mass of TFE used in the polymerization reaction), reached 23.1 kg, the reaction was terminated. During this period, the polymerization temperature was raised to 85°C. The polymerization time was 154 minutes.

The obtained reaction liquid was cooled, and the supernatant paraffin wax was removed, whereupon the aqueous emulsion was taken out. A coagulum remaining in the reactor was just about a trace. The solid content concentration in the obtained aqueous emulsion was 26.7 mass%.

### (Concentrating step)

To the obtained aqueous emulsion, the nonionic surfactant (1) was dissolved so that the active component would be 2.7 parts by mass to 100 parts by mass of TFE copolymer particles, to obtain a stable aqueous dispersion. Then, 5 kg of the aqueous dispersion and 200 g of a strongly basic ion exchange resin (manufactured by Purolite, PUROLITE (registered trademark) A300) were put in a 5 L beaker, followed by stirring at room temperature for 12 hours.

Further, the aqueous dispersion was filtered by a nylon mesh with a mesh size 100, and then, concentrated by an electrophoresis method, whereupon the supernatant was removed, to obtain a concentrate with a solid content concentration of 66.0 mass%.

Then, to the concentrate, ion-exchanged water and the nonionic surfactant (1) were added, and at the same time, ammonia was added in such an amount that the concentration would be 500 ppm, to obtain an aqueous dispersion wherein the solid content concentration was 60.5 mass%, and the content of the active component of the nonionic surfactant (1) was 4.5 parts by mass to 100 parts by mass of the solid content (TFE copolymer particles).

The respective amounts of PFBE, the fluorinated emulsifier, the chain transfer agent and the nonionic surfactant used in this Example, the respective solid content concentrations in the aqueous emulsion and aqueous dispersion, and the average primary particle diameter and SSG of copolymer particles in the obtained aqueous dispersion, are shown in Table 1 (hereinafter the same applies). In Table 1, the unit "ppm/TFE" means the content (ppm) to the total mass of TFE to be used in the polymerization reaction.

The mechanical stability of the obtained aqueous dispersion was evaluated by the above-described method. The results are shown in Table 1 (hereinafter the same applies).

### [Comparative Example 1]

### (Polymerization step)

An aqueous emulsion was obtained in the same manner as in Example 1, except that in the polymerization step in Example 1, the chain transfer agent (1) was not added. The polymerization time was 119 minutes.

### (Concentrating step)

An aqueous dispersion was obtained in the same manner as in Example 1 except that in the concentrating step in Example 1, the condition shown in Table 1 was changed.

### [Example 2]

### (Polymerization step)

Into a 100 L stainless steel autoclave equipped with baffles and a stirrer, 76 g of the fluorinated emulsifier (1), 860 g of paraffin wax and 59 L of deionized water were charged. The autoclave was purged with nitrogen and then brought to a reduced pressure, and 3.3 g of the comonomer (1) was charged. Further, while pressurizing with TFE, the temperature was raised to 79°C with stirring. Then, the pressure was raised to 1.23 MPa with TFE, and 0.2 g of ammonium persulfate and 26.4 g of disuccinic acid peroxide (concentration: 80 mass%, remainder: water) dissolved in 1 L of hot water at about 70°C were injected to initiate a polymerization reaction. The internal pressure dropped to 1.21 MPa in about 7 minutes. While adding TFE so that the internal pressure of the autoclave would be maintained to be 1.23 MPa, the polymerization was continued. At the time when the amount of TFE added after initiation of the polymerization became 3.9 kg, 4.7 g of the chain transfer agent (1) was added.

During the polymerization, 159 g of the fluorinated emulsifier (1) dissolved in 1 L of water was added dividedly. At the time when the amount of TFE added after initiation of the polymerization became 16.4 kg, 1.9 g of the chain transfer agent (1) was added. Then, at the time when the amount of TFE added after initiation of the polymerization (the total mass of TFE used in the polymerization reaction) reached 22.0 kg, the reaction was terminated. During this period, the polymerization temperature was raised to 85°C. The polymerization time was 263 minutes.

The obtained reaction liquid was cooled, and the supernatant paraffin wax was removed, whereupon the aqueous emulsion was taken out. A coagulum remaining in the reactor was just about a trace. The solid content concentration of the obtained aqueous emulsion was 25.9 mass%.

### (Concentrating step)

An aqueous dispersion was obtained in the same manner as in Example 1 except that in the concentrating step in Example 1, the condition shown in Table 1 was changed.

### [Example 3]

### (Polymerization step)

An aqueous emulsion was obtained in the same manner as in Example 2 except that in the polymerization step in Example 2, the internal pressure of the autoclave during the polymerization was changed from 1.23 MPa to 1.42 MPa, and at the time when the amount of TFE added after initiation of the polymerization became 3.9 kg and 16.4 kg, the amount of the chain transfer agent (1) to be used, was increased to 9.3 g and 3.9 g, respectively. The polymerization time was 214 minutes. The solid content concentration of the obtained aqueous emulsion was 25.8 mass%.

### (Concentrating step)

An aqueous dispersion was obtained in the same manner as in Example 1 except that in the concentrating step in Example 1, the condition shown in Table 1 was changed.

### [Example 4]

### (Polymerization step)

Into a 100 L stainless steel autoclave equipped with baffles and a stirrer, 76 g of the fluorinated emulsifier (1), 860 g of paraffin wax, 59 L of deionized water were charged. The autoclave was purged with nitrogen and then brought to a reduced pressure, and 2.4 g of the comonomer (1) was charged. Further, while pressurizing with TFE, the temperature was raised to 79°C with stirring. Then, the pressure was raised to 1.13 MPa with TFE, and 0.2 g ammonium persulfate and 26.4 g of disuccinic acid peroxide (concentration: 80 mass%, remainder: water) dissolved in 1 L of hot water at about 70°C were injected to initiate a polymerization reaction. The internal pressure dropped to 1.21 MPa in about 7 minutes. While adding TFE so that the internal pressure of the autoclave was maintained at 1.23 MPa, the polymerization was continued. At the time when the amount of TFE added after initiation of the polymerization became 3.9 kg, 1.2 g of the chain transfer agent (1) was added. During the polymerization, 159 g of the fluorinated emulsifier (1) dissolved in 1 L of water was dividedly added. At the time when the amount of TFE added after initiation of the polymerization became 16.4 kg, 0.5 g of the chain transfer agent (1) was added. Then, at the time when the amount of TFE added after initiation of polymerization (the total mass of TFE used in the polymerization reaction) reached 28.0 kg, the reaction was terminated. During this period, the polymerization temperature was raised to 85°C. The polymerization time was 265 minutes.

The obtained reaction liquid was cooled, and the supernatant paraffin wax was removed, whereupon the aqueous emulsion was taken out. A coagulum remaining in the reactor was just about a trace. The solid content concentration of the obtained aqueous emulsion was 29.6 mass%.

### (Concentrating step)

An aqueous dispersion was obtained in the same manner as in Example 1 except that in the concentrating step in Example 1, the condition shown in Table 1 was changed.

### [Example 5]

### (Polymerization step)

An aqueous emulsion was obtained in the same manner as in Example 1 except that in the polymerization step in Example 1, the internal pressure of the autoclave during polymerization was changed from 1.23 MPa to 1.96 MPa, and at the time when the amount of TFE added after initiation of the polymerization became 20.8 kg, the amount of the chain transfer agent (1) to be used was changed to 46.2 g. The polymerization time was 111 minutes. The solid content concentration in the obtained aqueous emulsion was 26.6 mass%.

### (Concentrating step)

An aqueous dispersion was obtained in the same manner as in Example 1 except that in the concentrating step in Example 1, the condition shown in Table 1 was changed.

### [Example 6]

### (Polymerization step)

An aqueous emulsion was obtained in the same manner as in Example 1 except that in the polymerization step in Example 1, the internal pressure of the autoclave during polymerization was changed from 1.23 MPa to 1.96 MPa, and at the time when the amount of TFE added after initiation of the polymerization became 20.8 kg, the amount of the chain transfer agent (1) to be used, was changed to 115.6 g. The polymerization time was 196 minutes. The solid content concentration in the obtained aqueous emulsion was 26.7 mass%.

### (Concentrating step)

An aqueous dispersion was obtained in the same manner as in Example 1 except that in the concentrating step in Example 1, the condition shown in Table 1 was changed.

**[Table 1]**

| | | [unit] | Ex. 1 | Ex. 2 | Ex. 3 | Ex. 4 | Ex. 5 | Ex. 6 | Comp. Ex. 1 |
|---|---|---|---|---|---|---|---|---|---|
| Polymerization step | Amount of PFBE | [ppm/TFE] | 152 | 150 | 150 | 86 | 152 | 152 | 152 |
| | Amount of fluorinated emulsifier | [ppm/TFE] | 10,087 | 10,682 | 10,682 | 8,393 | 10,130 | 10,087 | 10,087 |
| | Amount of chain transfer agent | [ppm/TFE] | 602 | 300 | 600 | 61 | 2,009 | 5,004 | 0 |
| | Solid content concentration in aqueous emulsion | [mass%] | 26.7 | 25.9 | 25.8 | 29.6 | 26.6 | 26.7 | 26.7 |
| Concentrating step | Amount of nonionic surfactant | [Parts by mass/100 parts by mass of solid content] | 2.7 | 2.7 | 2.7 | 2.7 | 2.7 | 2.7 | 2.7 |
| | Solid content concentration in concentrate | [mass%] | 66.0 | 67.4 | 66.5 | 67.6 | 66.3 | 68.2 | 67.1 |
| Aqueous dispersion | Amount of nonionic surfactant | [Parts by mass/100 parts by mass of solid content] | 4.5 | 4.5 | 4.5 | 4.5 | 4.5 | 4.5 | 4.5 |
| | Solid content concentration in aqueous dispersion | [mass%] | 60.5 | 60.5 | 60.5 | 60.5 | 60.5 | 60.5 | 60.5 |
| Copolymer particles | Average primary particle size | [µm] | 0.22 | 0.21 | 0.20 | 0.24 | 0.21 | 0.21 | 0.21 |
| | SSG | - | 2.180 | 2.234 | 2.246 | 2.207 | 2.193 | 2.209 | 2.166 |
| Mechanical stability | Stability retention time | [min] | 66 | 55 | 53 | 45 | 75 | 80 | 37 |

As shown by the evaluation results in Table 1, in each of Examples 1, 2, 3, 4, 5 and 6, the obtained aqueous dispersion was excellent in mechanical stability, as compared with Comparative Example 1 wherein the chain transfer agent was not added during the polymerization reaction.

Further, when each of Example 1, 2, 3, 5 and 6 is compared with Comparative Example 1, the amount of PFBE used and the amount of the fluorinated emulsifier used, were the same as each other and the average primary particle size of copolymer particles was substantially the same, but in each of Example 1, 2, 3, 5 and 6, SSG was larger than in Comparative Example 1. That is, it is understood that in each of Example 1, 2, 3, 5 and 6, the molecular weight of the copolymer was low as the chain transfer agent was added during the polymerization reaction.

In Example 4, it is shown that even if the solid content concentration in the aqueous emulsion was increased in consideration of the productivity, it was still possible to maintain the mechanical stability sufficiently.

## Claims

1. A method for producing an aqueous dispersion containing a tetrafluoroethylene copolymer, **characterized by** comprising
a polymerization step of subjecting tetrafluoroethylene and a (perfluoroalkyl) ethylene represented by the following formula (1) to a polymerization reaction, in an aqueous medium, using a polymerization initiator, in the presence of a fluorinated emulsifier selected from the group consisting of C₄₋₇ fluorinated carboxylic acids having from 1 to 4 etheric oxygen atoms, and salts thereof, to obtain an aqueous emulsion having particles of a tetrafluoroethylene copolymer dispersed with a solid content concentration of from 10 to 45 mass%, and
a concentrating step of adding a nonionic surfactant represented by the following formula (2) to the aqueous emulsion, followed by concentration to a solid content concentration of from 50 to 70 mass% to obtain an aqueous dispersion,
wherein
in the polymerization step, tetrafluoroethylene is continuously or intermittently supplied to the polymerization reaction vessel, the (perfluoroalkyl) ethylene is initially added all at once, and a chain transfer agent is added at the time when from 10 to 95 mass% of the total mass of tetrafluoroethylene to be used in the polymerization reaction has been supplied,
CH₂=CH-Rf (1)
in the formula (1), Rf is a C₁₋₇ perfluoroalkyl group,
R¹-O-A-H (2)
wherein R¹ is a C₈₋₁₈ alkyl group, and A is a polyoxyalkylene chain composed of an average repeating number of from 5 to 20 oxyethylene groups and an average repeating number of from 0 to 2 oxypropylene groups.

2. The method for producing an aqueous dispersion according to Claim 1, wherein the amount of the chain transfer agent to be used is from 20 to 10,000 ppm to the total mass of tetrafluoroethylene to be used in the polymerization reaction.

3. The method for producing an aqueous dispersion according to Claim 1 or 2, wherein the chain transfer agent is methanol.

4. The method for producing an aqueous dispersion according to any one of Claims 1 to 3, wherein the amount of the (perfluoroalkyl) ethylene to be used is from 20 to 3,000 ppm to the total mass of tetrafluoroethylene to be used in the polymerization reaction.

5. The method for producing an aqueous dispersion according to any one of Claims 1 to 4, wherein the (perfluoroalkyl) ethylene is (perfluoroethyl) ethylene, (perfluorobutyl) ethylene or (perfluorohexyl) ethylene.

6. The method for producing an aqueous dispersion according to any one of Claims 1 to 5, wherein the nonionic surfactant is added in an amount of from 1 to 20 parts by mass to 100 parts by mass of the solid content in the aqueous emulsion.

7. The method for producing an aqueous dispersion according to any one of Claims 1 to 6, wherein the fluorinated emulsifier is an ammonium salt of one of the fluorinated carboxylic acids.

8. The method for producing an aqueous dispersion according to any one of Claims 1 to 7, wherein the amount of the fluorinated emulsifier to be used is from 1,500 to 20,000 ppm to the total mass of tetrafluoroethylene to be used in the polymerization reaction.

9. The method for producing an aqueous dispersion according to any one of Claims 1 to 8, wherein in the formula (2), R¹ is C₁₀₋₁₆, and A is a polyoxyalkylene chain composed of an average repeating number of from 7 to 12 oxyethylene groups and an average repeating number of from 0 to 2 oxypropylene groups.

10. The method for producing an aqueous dispersion according to any one of Claims 1 to 9, wherein the amount of the nonionic surfactant to be added before the concentration is from 1 to 20 parts by mass to 100 parts by mass of the solid content in the aqueous emulsion before the concentration.

11. The method for producing an aqueous dispersion according to any one of Claims 1 to 10, wherein the content of the nonionic surfactant after the concentration is from 1 to 20 parts by mass to 100 parts by mass of the solid content in the aqueous dispersion.

12. The method for producing an aqueous dispersion according to any one of Claims 1 to 11, wherein the average primary particle size of the particles of the tetrafluoroethylene copolymer is from 0.1 to 0.5 µm, and wherein the average primary particle size means a median diameter on volume basis of the particle sizes of the particles of the tetrafluoroethylene copolymer in the aqueous dispersion, as measured by a laser scattering method particle size distribution analyzer.

13. The method for producing an aqueous dispersion according to any one of Claims 1 to 12, wherein the standard specific gravity of the tetrafluoroethylene copolymer is from 2.14 to 2.25, and wherein the standard specific gravity is an index for the molecular weight of the tetrafluoroethylene copolymer, as measured in accordance with ASTM D1457-91 a, D4895-91a.

## Patentansprüche

1. Verfahren zur Herstellung einer wässrigen Dispersion, enthaltend ein Tetrafluorethylencopolymer, **dadurch gekennzeichnet, dass** es umfasst
einen Polymerisationsschritt des Unterziehens von Tetrafluorethylen und eines (Perfluoralkyl)ethylens, dargestellt durch die nachstehende Formel (1), einer Polymerisationsreaktion in einem wässrigen Medium unter Verwendung eines Polymerisationsinitiators in der Gegenwart eines fluorierten Emulgierungsmittels, ausgewählt aus der Gruppe, bestehend aus fluorierten C₄₋₇-Carbonsäuren mit 1 bis 4 etherischen Sauerstoffatomen und Salzen davon, um eine wässrige Emulsion mit Teilchen eines Tetrafluorethylencopolymers, dispergiert mit einer Feststoffgehaltkonzentration von 10 bis 45 Massen-%, zu erhalten, und
einen Konzentrationsschritt des Hinzugebens eines nicht-ionischen grenzflächenaktiven Mittels, dargestellt durch die nachstehende Formel (2), zu der wässrigen Emulsion, gefolgt von einer Konzentrierung auf eine Feststoffgehaltkonzentration von 50 bis 70 Massen-%, um eine wässrige Dispersion zu erhalten, wobei
in dem Polymerisationsschritt Tetrafluorethylen kontinuierlich oder periodisch dem Polymerisationsreaktionsgefäß zugeführt wird, das (Perfluoralkyl)ethylen zu Beginn auf einmal hinzugegeben wird, und ein Kettenübertragungsmittel zu dem Zeitpunkt, als von 10 bis 95 Massen-% der Gesamtmasse des in der Polymerisationsreaktion zu verwendenden Tetrafluorethylens zugeführt worden ist, hinzugegeben wird,
CH₂=CH-Rf (1)
wobei in der Formel (1) Rf eine C₁₋₇-Perfluoralkylgruppe ist,
R¹-O-A-H (2)
wobei R¹ eine C₈₋₁₈-Alkylgruppe ist, und A eine Polyoxyalkylenkette, gebildet aus einer gemittelten Wiederholungszahl von 5 bis 20 Oxyethylengruppen und einer gemittelten Wiederholungszahl von 0 bis 2 Oxypropylengruppen, ist.

2. Verfahren zur Herstellung einer wässrigen Dispersion nach Anspruch 1, wobei die Menge des zu verwendenden Kettenübertragungsmittels von 20 bis 10000 ppm, bezogen auf die Gesamtmasse des in der Polymerisationsreaktion zu verwendenden Tetrafluorethylens, beträgt.

3. Verfahren zur Herstellung einer wässrigen Dispersion nach Anspruch 1 oder 2, wobei das Kettenübertragungsmittel Methanol ist.

4. Verfahren zur Herstellung einer wässrigen Dispersion nach einem der Ansprüche 1 bis 3, wobei die Menge des zu verwendenden (Perfluoralkyl)ethylens von 20 bis 3000 ppm, bezogen auf die Gesamtmasse des in der Polymerisationsreaktion zu verwendenden Tetrafluorethylens, beträgt.

5. Verfahren zur Herstellung einer wässrigen Dispersion nach einem der Ansprüche 1 bis 4, wobei das (Perfluoralkyl)ethylen (Perfluorethyl)ethylen, (Perfluorbutyl)ethylen oder (Perfluorhexyl)ethylen ist.

6. Verfahren zur Herstellung einer wässrigen Dispersion nach einem der Ansprüche 1 bis 5, wobei das nicht-ionische grenzflächenaktive Mittel in einer Menge von 1 bis 20 Massenteilen, bezogen auf 100 Massenteile des Feststoffgehalts in der wässrigen Emulsion, hinzugegeben wird.

7. Verfahren zur Herstellung einer wässrigen Dispersion nach einem der Ansprüche 1 bis 6, wobei das fluorierte Emulgierungsmittel ein Ammoniumsalz einer der fluorierten Carbonsäuren ist.

8. Verfahren zur Herstellung einer wässrigen Dispersion nach einem der Ansprüche 1 bis 7, wobei die Menge des zu verwendenden fluorierten Emulgierungsmittels von 1500 bis 20000 ppm, bezogen auf die Gesamtmasse des in der Polymerisationsreaktion zu verwendenden Tetrafluorethylens, beträgt.

9. Verfahren zur Herstellung einer wässrigen Dispersion nach einem der Ansprüche 1 bis 8, wobei in der Formel (2) R¹ C₁₀₋₁₆ ist, und A eine Polyoxyalkylenkette, gebildet aus einer gemittelten Wiederholungszahl von 7 bis 12 Oxyethylengruppen und einer gemittelten Wiederholungszahl von 0 bis 2 Oxypropylengruppen, ist.

10. Verfahren zur Herstellung einer wässrigen Dispersion nach einem der Ansprüche 1 bis 9, wobei die Menge des vor der Konzentrierung hinzuzugebenden nicht-ionischen grenzflächenaktiven Mittels von 1 bis 20 Massenteile, bezogen auf 100 Massenteile des Feststoffgehalts in der wässrigen Emulsion vor der Konzentrierung, beträgt.

11. Verfahren zur Herstellung einer wässrigen Dispersion nach einem der Ansprüche 1 bis 10, wobei der Gehalt des nicht-ionischen grenzflächenaktiven Mittels nach der Konzentrierung von 1 bis 20 Massenteile, bezogen auf 100 Massenteile des Feststoffgehalts in der wässrigen Dispersion, beträgt.

12. Verfahren zur Herstellung einer wässrigen Dispersion nach einem der Ansprüche 1 bis 11, wobei die gemittelte Primärteilchengröße der Teilchen des Tetrafluorethylencopolymers von 0,1 bis 0,5 µm beträgt, und wobei die gemittelte Primärteilchengröße einen Mediandurchmesser auf Volumenbasis der Teilchengrößen der Teilchen des Tetrafluorethylencopolymers in der wässrigen Dispersion, gemessen mittels eines Teilchengrößenverteilungsanalysators nach einem Laserstreuungsverfahren, bedeutet.

13. Verfahren zur Herstellung einer wässrigen Dispersion nach einem der Ansprüche 1 bis 12, wobei das standardspezifische Gewicht des Tetrafluorethylencopolymers von 2,14 bis 2,25 beträgt, und wobei das standardspezifische Gewicht ein Index für das Molekulargewicht des Tetrafluorethylencopolymers, gemessen in Übereinstimmung mit ASTM D1457-91 a, D4895-91a, ist.

## Revendications

1. Procédé de production d'une dispersion aqueuse contenant un copolymère de tétrafluoroéthylène, **caractérisé par** le fait de comprendre
une étape de polymérisation consistant à soumettre du tétrafluoroéthylène et un (perfluoroalkyl)éthylène représenté par la formule suivante (1) à une réaction de polymérisation, dans un milieu aqueux, en utilisant un initiateur de polymérisation, en présence d'un émulsifiant fluoré sélectionné parmi le groupe constitué d'acides carboxyliques fluorés en C₄₋₇ ayant 1 à 4 atomes d'oxygène éthérique, et de sels de ceux-ci, pour obtenir une émulsion aqueuse ayant des particules d'un copolymère de tétrafluoroéthylène dispersées avec une concentration en teneur solide de 10 à 45 % en masse, et
une étape de concentration consistant à ajouter un tensioactif non ionique représenté par la formule suivante (2) à l'émulsion aqueuse, suivie d'une concentration à une concentration en teneur solide de 50 à 70 % en masse pour obtenir une dispersion aqueuse, dans lequel
dans l'étape de polymérisation, du tétrafluoroéthylène est fourni en continu ou par intermittence au récipient à réaction de polymérisation, le (perfluoroalkyl)éthylène est ajouté initialement d'un coup, et un agent de transfert de chaîne est ajouté au moment où de 10 à 95 % en masse de la masse totale de tétrafluoroéthylène devant être utilisée dans la réaction de polymérisation ont été fournis,
CH₂=CH-Rf (1)
dans la formule (1), Rf est un groupe perfluoroalkyle en C₁₋₇,
R¹-O-A-H (2)
dans laquelle R¹ est un groupe alkyle en C₈₋₁₈, et A est une chaîne polyoxyalkylène composée d'un nombre de répétitions moyen de 5 à 20 groupes oxyéthylène et d'un nombre de répétitions moyen de 0 à 2 groupes oxypropylène.

2. Procédé de production d'une dispersion aqueuse selon la revendication 1, dans lequel la quantité de l'agent de transfert de chaîne devant être utilisée va de 20 à 10 000 ppm sur la masse totale de tétrafluoroéthylène devant être utilisée dans la réaction de polymérisation.

3. Procédé de production d'une dispersion aqueuse selon la revendication 1 ou 2, dans lequel l'agent de transfert de chaîne est le méthanol.

4. Procédé de production d'une dispersion aqueuse selon l'une quelconque des revendications 1 à 3, dans lequel la quantité du (perfluoroalkyl)éthylène devant être utilisée va de 20 à 3000 ppm sur la masse totale de tétrafluoroéthylène devant être utilisée dans la réaction de polymérisation.

5. Procédé de production d'une dispersion aqueuse selon l'une quelconque des revendications 1 à 4, dans lequel le (perfluoroalkyl)éthylène est le (perfluoroéthyl)éthylène, (perfluorobutyl)éthylène ou (perfluorohexyl)éthylène.

6. Procédé de production d'une dispersion aqueuse selon l'une quelconque des revendications 1 à 5, dans lequel le tensioactif non ionique est ajouté en une quantité allant de 1 à 20 parties en masse sur 100 parties en masse de la teneur solide dans l'émulsion aqueuse.

7. Procédé de production d'une dispersion aqueuse selon l'une quelconque des revendications 1 à 6, dans lequel l'émulsifiant fluoré est un sel d'ammonium d'un des acides carboxyliques fluorés.

8. Procédé de production d'une dispersion aqueuse selon l'une quelconque des revendications 1 à 7, dans lequel la quantité de l'émulsifiant fluoré devant être utilisée va de 1500 à 20 000 ppm sur la masse totale de tétrafluoroéthylène devant être utilisée dans la réaction de polymérisation.

9. Procédé de production d'une dispersion aqueuse selon l'une quelconque des revendications 1 à 8, dans lequel dans la formule (2), R¹ est C₁₀₋₁₆, et A est une chaîne polyoxyalkylène composée d'un nombre de répétitions moyen de 7 à 12 groupes oxyéthylène et d'un nombre de répétitions moyen de 0 à 2 groupes oxypropylène.

10. Procédé de production d'une dispersion aqueuse selon l'une quelconque des revendications 1 à 9, dans lequel la quantité du tensioactif non ionique devant être ajoutée avant la concentration va de 1 à 20 parties en masse sur 100 parties en masse de la teneur solide dans l'émulsion aqueuse avant la concentration.

11. Procédé de production d'une dispersion aqueuse selon l'une quelconque des revendications 1 à 10, dans lequel la teneur en le tensioactif non ionique après la concentration va de 1 à 20 parties en masse sur 100 parties en masse de la teneur solide dans la dispersion aqueuse.

12. Procédé de production d'une dispersion aqueuse selon l'une quelconque des revendications 1 à 11, dans lequel la taille particulaire primaire moyenne des particules du copolymère de tétrafluoroéthylène va de 0,1 à 0,5 µm, et dans lequel la taille particulaire primaire moyenne signifie une base de diamètre médian sur volume des tailles particulaires des particules du copolymère de tétrafluoroéthylène dans la dispersion aqueuse, telles que mesurées par un analyseur de distribution de tailles particulaires par procédé de diffusion laser.

13. Procédé de production d'une dispersion aqueuse selon l'une quelconque des revendications 1 à 12, dans lequel la gravité spécifique standard du copolymère de tétrafluoroéthylène va de 2,14 à 2,25, et dans lequel la gravité spécifique standard est un indice pour le poids moléculaire du copolymère de tétrafluoroéthylène, tel que mesuré conformément à ASTM D1457-91a, D4895-91a.
